(19) Europäisches Patentamt
European Patent Office
Office européen des brevets

(11) **EP 3 193 439 A1**

(12) **EUROPEAN PATENT APPLICATION**
published in accordance with Art. 153(4) EPC

(43) Date of publication:
**19.07.2017 Bulletin 2017/29**

(51) Int Cl.:
***H02M 7/12*** *(2006.01)*

(21) Application number: **15839562.4**

(22) Date of filing: **31.08.2015**

(86) International application number:
**PCT/JP2015/074668**

(87) International publication number:
**WO 2016/039205 (17.03.2016 Gazette 2016/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **10.09.2014 JP 2014184165**

(71) Applicants:
• **Omron Corporation**
**Kyoto-shi, Kyoto 600-8530 (JP)**
• **Kyushu University,**
**National University Corporation**
**Fukuoka-shi, Fukuoka 812-8581 (JP)**

(72) Inventors:
• **MORISHITA, Sadaharu**
**Kyoto-shi**
**Kyoto 600-8530 (JP)**
• **TAKATORI, Koji**
**Kyoto-shi**
**Kyoto 600-8530 (JP)**
• **SHOYAMA, Masahito**
**Fukuoka-shi**
**Fukuoka 812-8581 (JP)**
• **TAKASHITA, Haruomi**
**Fukuoka-shi**
**Fukuoka 812-8581 (JP)**

(74) Representative: **Hinkelmann, Klaus**
**Patentanwaltskanzlei Hinkelmann**
**Lyonel-Feininger-Strasse 28**
**80807 München (DE)**

(54) **ELECTRONIC CIRCUIT AND ELECTRONIC CIRCUIT CONTROL METHOD**

(57) An electronic circuit includes: a rectification circuit that rectifies an AC voltage input from an AC power supply; a power factor correction circuit that includes a first switching element and that shapes a current which is input, by the first switching element being driven, from the AC power supply to the rectification circuit; an auxiliary circuit that reduces switching loss in the first switching element by drawing the current from the rectification circuit before the first switching element is turned off so that the current that flows through the first switching element is reduced; and a control circuit that allows the auxiliary circuit to operate for a certain period in a half cycle of the AC power supply, and that does not allow the auxiliary circuit to operate for the other period, which is other than the certain period, in the half cycle of the AC power supply.

FIG.1

**Description**

Technical Field

The present invention relates to an electronic circuit and a method for controlling the electronic circuit.

Background Art

Conventionally, power supply devices (electronic circuits) are known, in which an AC voltage input from an AC power supply is converted into a DC voltage so as to be output to a load. One example of the power supply devices includes a power supply device including a full-wave rectification circuit and a smoothing capacitor provided on an output side of the full-wave rectification circuit. However, in such a power supply device, there is a problem that the waveform of an input current is distorted. Thus, a power supply device including a power factor correction circuit (PFC) has been conventionally proposed to form the waveform of the input current into a sinusoidal waveform. The power factor correction circuit includes, for example, an inductor and a switching element that controls the current flowing through the inductor.

Prior Art Document

Non-Patent Document

[Non-Patent Document 1]

Mohammad, Mahdavi. and Hosein Farzanehfard. "Zero-Current-Transition Bridgeless PFC Without Extra Voltage and Current Stress." IEEE Transactions on Industrial Electronics, volume 56, no.7, July 2009.

Summary of the Invention

Problem to be Solved by the Invention

Here, in the power supply device with the power factor correction circuit as described above, the switching element is turned off when the current is flowing, which generates switching loss. In order to reduce the switching loss, an auxiliary circuit disclosed in Non-Patent Document 1 may be applied to the power supply device.
When the auxiliary circuit is provided in the power supply device, the auxiliary circuit can draw the current from the switching element. Thus, the switching element is turned off when no current is flowing, that is, ZCS (zero current switching) is performed. In this way, it is possible to reduce the switching loss.
Operating the auxiliary circuit makes possible to reduce the switching loss, however, it also generates loss (conduction loss) in the auxiliary circuit.
The present invention was made in consideration of the above problem, an object of which is to provide an electronic circuit capable of reducing loss in a device as a whole and a method for controlling the electronic circuit.

Means for Solving the Problem

An electronic circuit according to the present invention includes: a rectification circuit that rectifies an AC voltage input from an AC power supply; a power factor correction circuit that includes a first switching element and that shapes a current which is input, by the first switching element being driven, from the AC power supply to the rectification circuit; an auxiliary circuit that reduces switching loss in the first switching element by drawing the current from the rectification circuit before the first switching element is turned off so that the current that flows through the first switching element is reduced; and a control circuit that allows the auxiliary circuit to operate for a certain period in a half cycle of the AC power supply, and that does not allow the auxiliary circuit to operate for the other period, which is other than the certain period, in the half cycle of the AC power supply.
In the above-described electronic circuit, the certain period may be a period in which loss in operation of the auxiliary circuit is less than the switching loss, and the other period may be a period in which the loss in operation of the auxiliary circuit is more than the switching loss. The switching loss in the first switching element means loss that is generated in the first switching element by not operating the auxiliary circuit when the electronic circuit is operated. Accordingly, the switching loss in the first switching element is, for example, an integrated value of the product of the current and the voltage at the turn-off time. Also, the loss in operation of the auxiliary circuit means loss that is generated by operating the auxiliary circuit when the electronic circuit is operated. Accordingly, the loss in operation of the auxiliary circuit is, for example, a sum of conduction loss of the respective elements disposed in the auxiliary circuit.

In the above-described electronic circuit, the certain period may include a period in which an absolute value of the input voltage from the AC power supply is maximum, and the other period may include a period in which the absolute value of the input voltage from the AC power supply is minimum.

In the above-described electronic circuit, the control circuit may determine that the electronic circuit is in the certain period when the absolute value of the input voltage from the AC power supply is more than a predetermined value, and may determine that the electronic circuit is in the other period when the absolute value of the input voltage from the AC power supply is not more than the predetermined value. The predetermined value is determined according to, for example, a circuit design and an operating condition.

In the above-described electronic circuit, the auxiliary circuit may include: an inductor that is disposed in a positive pole line; a second switching element and a diode that are disposed on one end side of the inductor; and a capacitor that is disposed on the other end side of the inductor. The capacitor may be connected between the positive pole line and a negative pole line, and the second switching element and the diode may be connected in series between the positive pole line and the negative pole line. When the auxiliary circuit is operated, the second switching element may be turned on before the first switching element that has been turned on is turned off.

In a method for controlling an electronic circuit according to the present invention, the electronic circuit includes: a rectification circuit that rectifies an AC voltage input from an AC power supply; a power factor correction circuit that includes a first switching element and that shapes a current which is input, by the first switching element being driven, from the AC power supply to the rectification circuit; an auxiliary circuit that reduces switching loss in the first switching element by drawing the current from the rectification circuit before the first switching element is turned off so that the current that flows through the first switching element is reduced. The method includes the steps of: determining whether the electronic circuit is, in a half cycle of the AC power supply, in a certain period or in the period other than the certain period; and allowing the auxiliary circuit to operate when the electronic circuit is in the certain period, and not allowing the auxiliary circuit to operate when the electronic circuit is in the other period.

In the method for controlling the electronic circuit, the certain period may be a period in which the loss in operation of the auxiliary circuit is less than the switching loss, and the other period may be a period in which the loss in operation of the auxiliary circuit is more than the switching loss.

Effect of the Invention

With the electronic circuit and the method for controlling the electronic circuit according to the present invention, it is possible to reduce loss in a device as a whole.

Brief Description of the Drawings

[FIG.1]

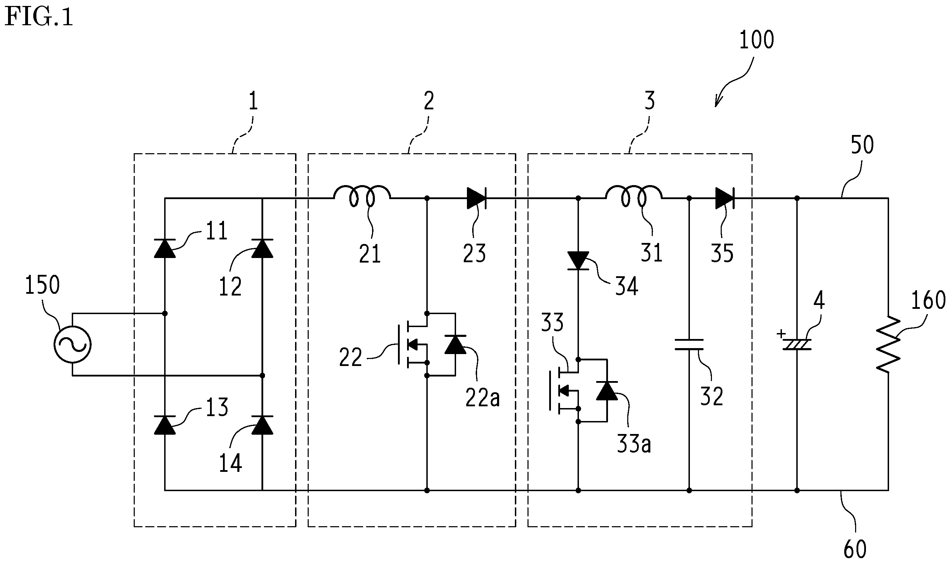

FIG. 1 is a circuit diagram of a power supply device according to an embodiment of the present invention.
[FIG. 2]

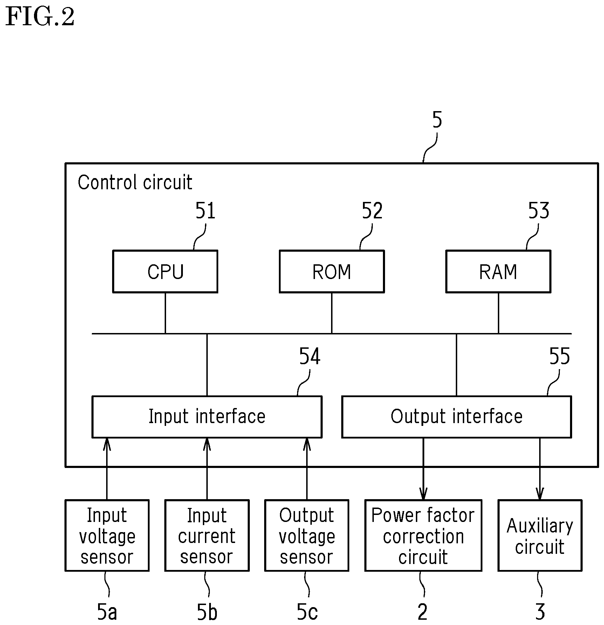

FIG. 2 is a block diagram showing a control circuit of the power supply device in FIG. 1.
[FIG. 3]

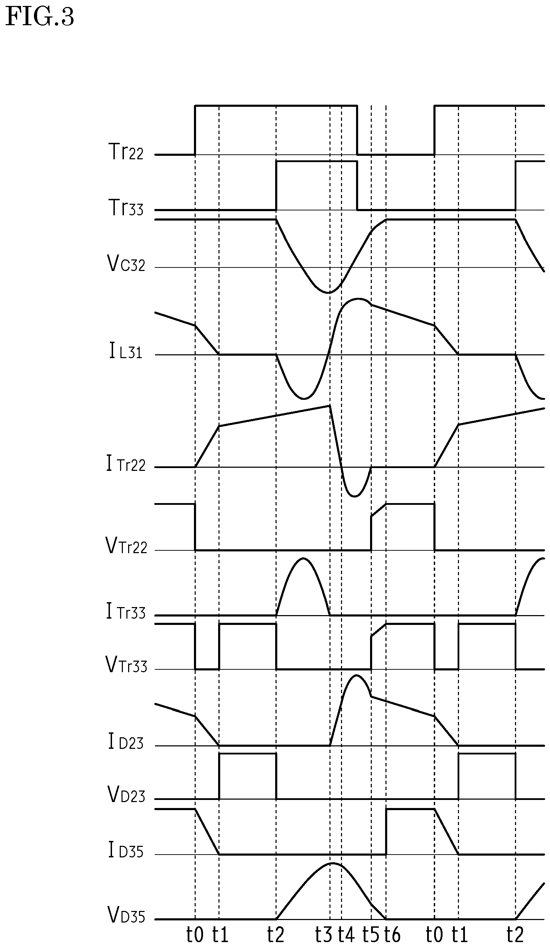

FIG. 3 is a timing chart for explaining operations of the power supply device in FIG. 1.
[FIG. 4]

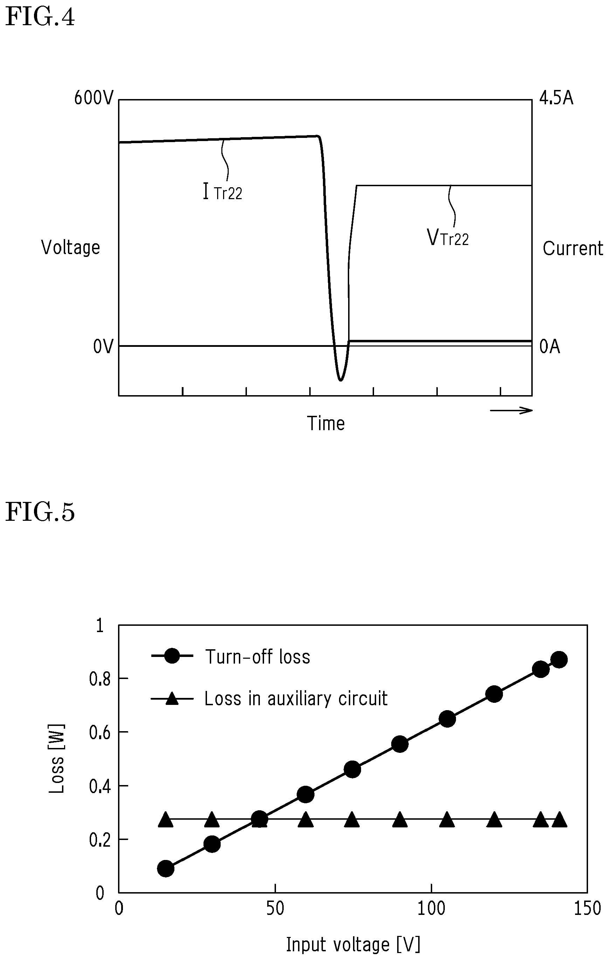

FIG. 4 is a graph showing a current waveform and a voltage waveform of a transistor, which were obtained by simulation.
[FIG. 5]
FIG. 5 is a graph showing a relationship of turn-off loss and loss in an auxiliary circuit, which was obtained by simulation.

Modes for Carrying Out the Invention

Hereinafter, description will be given on an embodiment of the present invention with reference to the drawings.
First, a circuit configuration of a power supply device 100 according to an embodiment of the present invention is described with reference to FIGS. 1 and 2. Note that the power supply device 100 is one example of the "electronic circuit" of the present invention.
As shown in FIG. 1, the power supply device 100 includes: a rectification circuit 1; a power factor correction circuit 2; an auxiliary circuit 3; a smoothing capacitor 4; and a control circuit 5 (see FIG. 2). An AC power supply (commercial power supply) 150 is connected to an input side of the power supply device 100, and a load 160 is connected to an output side of the power supply device 100. Thus, the power device 100 is configured to convert an AC voltage input from the AC power supply 150 into a DC voltage and to output the DC voltage to the load 160.

The rectification circuit 1 is provided to rectify the positive/negative voltage input from the AC power supply 150 in a positive direction. The rectification circuit 1 is disposed between the AC power supply 150 and the power factor correction circuit 2. The rectification circuit 1 is, for example, a full-wave rectification bridge circuit that includes four diodes 11 to 14.

The diode 11 and the diode 13 are connected in series. One output end of the AC power supply 150 is connected between the diode 11 and the diode 13. A cathode of the diode 11 is connected to a positive pole line 50 via elements (specifically, an inductor 21, a diode 23, an inductor 31 and a diode 35, described later) while an anode of the diode 13 is connected to a negative pole line 60. The diode 12 and the diode 14 are connected in series. The other output end of the AC power supply 150 is connected between the diode 12 and the diode 14. A cathode of the diode 12 is connected to the positive pole line 50 via the elements (specifically, the inductor 21, the diode 23, the inductor 31 and the diode 35, described later) while an anode of the diode 14 is connected to the negative pole line 60.

The power factor correction circuit 2 is provided to form an input current that is input from the AC power supply 150 to the rectification circuit 1 into a sinusoidal waveform. The power factor correction circuit 2 is disposed between the rectification circuit 1 and the auxiliary circuit 3. The power factor correction circuit 2 includes the inductor 21, a transistor 22 controlling the current flowing through the inductor 21, and the step-up diode 23. Note that the transistor 22 is one example of the "first switching element" of the present invention.

The inductor 21 and the diode 23 are arranged in series in the positive pole line 50. One end of the inductor 21 is connected to the rectification circuit 1, and the other end thereof is connected to an anode of the diode 23. A cathode of the diode 23 is connected to the auxiliary circuit 3. That is, the inductor 21 is disposed on the side of the rectification circuit 1 while the diode 23 is disposed on the side of the auxiliary circuit 3.

The transistor 22 is connected between the positive pole line 50 and the negative pole line 60. A source of the transistor 22 is connected to the negative pole line 60, and a drain thereof is connected to the positive pole line 50 between the inductor 21 and the diode 23. The control circuit 5 is connected to a gate of the transistor 22 so that a drive signal is input to the gate. Also, a diode 22a is connected in anti-parallel to the transistor 22. For example, the transistor 22 is a MOSFET and the diode 22a is a parasitic diode.

The auxiliary circuit 3 is provided to reduce switching loss in the transistor 22. Specifically, the auxiliary circuit 3 draws the current from the rectification circuit 1 before the transistor 22 is turned off so as to reduce the current that flows through the transistor 22. Thus, the transistor 22 is turned off when no current is flowing therethrough. That is, the auxiliary circuit 3 is provided to turn off the transistor 22 under ZCS condition. The auxiliary circuit 3 is disposed between the power factor correction circuit 2 and the smoothing capacitor 4.

The auxiliary circuit 3 includes: the inductor 31 and a capacitor 32 that constitute a resonant circuit; a transistor 33 and a diode 34 that control the resonance; and the diode 35 for preventing backflow. Note that the transistor 33 is one example of the "second switching element" of the present invention.

The inductor 31 and the diode 35 are arranged in series in the positive pole line 50. One end of the inductor 31 is connected to the cathode of the diode 23, and the other end thereof is connected to an anode of the diode 35. A cathode of the diode 35 is connected to the smoothing capacitor 4. That is, the inductor 31 is disposed on the side of the power factor correction circuit 2 while the diode 35 is disposed on the side of the smoothing capacitor 4. The capacitor 32 is disposed on the other end side of the inductor 31, and is connected between the negative pole line 60 and the positive pole line 50 that is between the inductor 31 and the diode 35.

The transistor 33 and the diode 34 are disposed on the one end side of the inductor 31, and are connected in series between the positive pole line 50 and the negative pole line 60. A source of the transistor 33 is connected to the negative pole line 60, and a drain thereof is connected to a cathode of the diode 34. The control circuit 5 is connected to a gate of the transistor 33 so that a drive signal is input to the gate. Also, a diode 33a is connected in anti-parallel to the transistor 33. For example, the transistor 33 is a MOSFET and the diode 33a is a parasitic diode. An anode of the diode 34 is connected to the positive pole line 50 between the inductor 31 and the diode 23. That is, the capacitor 32, the inductor 31, the diode 34 and the transistor 33 are connected in series.

Here, in this embodiment, the auxiliary circuit 3 can be switched between an operating state and a non-operating state. It is switched to the operating state when loss in operation (conduction loss) is less than the switching loss in the transistor 22 while it is switched to the non-operating state when the loss in operation is more than the switching loss in the transistor 22. This will be described in detail later.

The smoothing capacitor 4 is provided to smooth the output of the rectification circuit 1. The smoothing capacitor 4 is, for example, an electrolytic capacitor that is disposed between the auxiliary circuit 3 and the load 160 and that is connected between the positive pole line 50 and the negative pole line 60. Both ends of the load 160 are respectively connected to the positive pole line 50 and the negative pole line 60.

The control circuit 5 is provided to allow the power supply device 100 to operate. The control circuit 5 drives the transistor 22 so as to allow the power factor correction circuit 2 to operate. The control circuit 5 also drives the transistor 33 so as to bring the auxiliary circuit 3 to the operating state, and does not drive the transistor 33 so as to bring the auxiliary circuit 3 to the non-operating state.

Specifically, the control circuit 5 includes, as shown in FIG. 2 for example, a CPU 51, a ROM 52, a RAM 53, an input interface 54 and an output interface 55. The control circuit 5 may include devices other than the above-described digital devices.

The CPU 51 executes programs and the like that are stored in the ROM 52. The ROM 52 stores programs, set values to be used at the time of executing the programs, and the like. The RAM 53 has a function to temporarily store detection results by sensors and the like.

To the input interface 54, for example, an input voltage sensor 5a, an input current sensor 5b and an output voltage sensor 5c are connected so that detection results are input to the input interface 54 from the respective sensors. To the output interface 55, for example, the power factor correction circuit 2 and the auxiliary circuit 3 are connected so that drive signals are output from the output interface 55 to drive the transistors 22 and 33.

The input voltage sensor 5a is provided to detect the input voltage that is output from the AC power supply 150 and that is input to the rectification circuit 1. The input current sensor 5b is provided to detect the input current that is input to the rectification circuit 1. The output voltage sensor 5c is provided to detect the output voltage that is output to the load 160.

In this embodiment, the control circuit 5 allows the auxiliary circuit 3 to operate for a certain period in the half cycle of the AC power supply 150, and does not allow the auxiliary circuit 3 to operate for the other period, which is other than the certain period, in the half cycle of the AC power supply 150.

For example, the certain period is a period in which the loss in operation of the auxiliary circuit 3 is less than the switching loss in the transistor 22. The other period is a period in which the loss in operation of the auxiliary circuit 3 is more than the switching loss in the transistor 22. Also, the certain period includes a period in which the absolute value of the input voltage from the AC power supply 150 is maximum while the other period includes a period in which the absolute value of the input voltage from the AC power supply 150 is minimum.

When the absolute value of the input voltage from the AC power supply 150 is more than a predetermined value, the control circuit 5 determines that the power supply device 100 is in the certain period and brings the auxiliary circuit 3 to the operating state. When the absolute value of the input voltage from the AC power supply 150 is not more than the predetermined value, the control circuit 5 determines that the power supply device 100 is in the other period and brings the auxiliary circuit 3 to the non-operating state. The predetermined value, which is determined according to, for example, a circuit design and an operating condition, may be stored in advance in the ROM 52 and the like, or may be calculated by the CPU 51 based on information stored in the ROM 52 and the like.

Next, description is given on operations of the power supply device 100 with reference to FIGS. 1 to 3. In the power supply device 100, the transistor 22 is switched by the control circuit 5 at a predetermined period, thus the input current that is input to the rectification circuit 1 is formed into the sinusoidal waveform. Then, if the power supply device 100 is in the certain period in the half cycle of the AC power supply 150, the auxiliary circuit 3 is operated, which means that the transistor 33 is turned on before the transistor 22 that has been turned on is turned off. Thus, the current that flows through the transistor 22 is drawn out, and the transistor 22 is turned off under ZCS condition. Hereinafter, description is given on the operation in a predetermined one period in case of the certain period.

In the waveform chart in FIG. 3, the respective reference numerals represent the following, in order from the top: $Tr_{22}$ represents the on/off state of the transistor 22; $Tr_{33}$ represents the on/off state of the transistor 33; $V_{C32}$ represents the voltage of the capacitor 32; $I_{L31}$ represents the current of the inductor 31; $I_{Tr22}$ represents the current between the drain and the source of the transistor 22; $V_{Tr22}$ represents the voltage between the drain and the source of the transistor 22; $I_{Tr33}$ represents the current between the drain and the source of the transistor 33; $V_{Tr33}$ represents the voltage between the drain and the source of the transistor 33; $I_{D23}$ represents the current of the diode 23; $V_{D23}$ represents the voltage between the terminals of the diode 23; $I_{D35}$ represents the current of the diode 35; and $V_{D35}$ represents the voltage between the terminals of the diode 35. $I_{Tr22}$ includes the current flowing through the diode 22a that is a parasitic diode.

Before the time point t0, the transistor 22 and the transistor 33 are being turned off. The current from the rectification circuit 1 is output to the side of the smoothing capacitor 4 via the inductor 21, the diode 23, the inductor 31 and the diode 35.

Then, when the transistor 22 is turned on at the time point t0, the current from the inductor 21 flows to the transistor 22, which results in decrease in the current that is output to the smoothing capacitor 4 via the diode 23, the inductor 31 and the diode 35. Here, the transistor 22 is turned on in a state in which no current flows through the transistor 22, thus it is performed under ZCS condition.

From the time point t1 when the current stops flowing through the diode 23, the inductor 31 and the diode 35, the current from the inductor 21 completely flows to the transistor 22. At this time, energy is accumulated in the inductor 21, which results in increase in the current that flows through the inductor 21 and the transistor 22.

After that, when the transistor 33 is turned on at the time point t2, the inductor 31 and the capacitor 32 start to resonate. Thus, the capacitor 32 discharges and the current flows through the inductor 31, the diode 34 and the transistor 33. Then, at the time point t3 when 1/2 of the resonant period has elapsed, the direction of the current that flows through the inductor 31 is reversed. At this time, since the diode 34 prevents the backflow of the current, the current, which has flown from the inductor 21 to the transistor 22, flows to the inductor 31 via the diode 23, which results in rapid decrease in the current that flows through the transistor 22.

Then, from the time point t4 when the current that flows through the transistor 22 becomes zero, the diode 22a is conducted. In this way, when the current flows through the diode 22a, no current flows through the transistor 22. Then, when 3/4 of the resonant period has elapsed (i.e., when the current that flows through the diode 22a is maximum), the transistor 22 is turned off. Thus, the transistor 22 is turned off under ZCS condition. The transistor 33 is also turned off at the same time as the turn-off of the transistor 22.

After that, at the time point t5, the current stops flowing through the diode 22a, and at the time point t6, the capacitor 32 is fully charged. Then, from the time point t6, the current is output to the side of the smoothing capacitor 4 via the diode 35.

The above-described operations are repeatedly performed.

In this embodiment, since the auxiliary circuit 3 is provided as described above, it is possible to draw the current from the transistor 22 by the auxiliary circuit 3 before the transistor 22 is turned off, which results in reduction in the turn-off loss.

Next, description is given on simulation that was performed in order to confirm the effect of this embodiment. The simulation was performed using a circuit simulator LTspice.

As the simulation conditions, the output power was set to 240W. The input voltage (output voltage of the AC power supply 150) $V_{AC}$ was set to 100Vrms, and the frequency $f_{AC}$ of the AC power supply 150 was set to 60Hz. The output voltage Vo of the power supply device 100 was set to 385V, and the capacitance of the smoothing capacitor 4 was set to 1mF. The switching frequency fsw of the transistor 22 of the power factor correction circuit 2 was set to 200kHz, and the inductance of the inductor 21 of the power factor correction circuit 2 was set to 800$\mu$H. The inductance of the inductor 31 of the auxiliary circuit 3 was set to 3.3$\mu$H, and the capacitance of the capacitor 32 of the auxiliary circuit 3 was set to 0.5nF. Thus, the resonant period Ta was 0.255$\mu$s.

The results of the simulation are indicated in FIG. 4. FIG. 4 is a graph that indicates the relationship of the current $I_{Tr22}$ and the voltage $V_{Tr22}$ between the drain and the source of the transistor 22. From the current waveform and the voltage waveform indicated in FIG. 4, it was confirmed that the transistor 22 was turned off under ZCS condition.

Here, as in this embodiment, when the auxiliary circuit 3 is provided and operated, the current caused by the resonance flows through the inductor 31, the diode 34 and the transistor 33, which results in loss (conduction loss) in the auxiliary circuit 3.

For this reason, in the power supply device 100 of this embodiment, the auxiliary circuit 3 is brought to the operating state when the power supply device 100 is in the certain period in the half cycle of the AC power supply 150 (i.e., in the period in which the loss in the auxiliary circuit 3 is less than the turn-off loss in the transistor 22). The auxiliary circuit 3 is brought to the non-operating state when the power supply device 100 is in the other period in the half cycle of the AC power supply 150 (i.e., in the period in which the loss in the auxiliary circuit 3 is more than the turn-off loss in the transistor 22).

When the auxiliary circuit 3 is operated, the turn-off loss in the transistor 22 can be reduced by switching the transistor 33 by the control circuit 5. However, the conduction loss is generated by the resonance in the auxiliary circuit 3. On the other hand, when the auxiliary circuit 3 is not operated, the transistor 33 is being turned off, thus the conduction loss is not generated by the resonance in the auxiliary circuit 3. However, the turn-off loss in the transistor 22 is generated.

With the above-described configuration, when the power supply device 100 is in the certain period (i.e., in the period in which the loss in the auxiliary circuit 3 is less than the turn-off loss), it is possible to reduce the turn-off loss by bringing the auxiliary circuit 3 to the operating state, and when the power supply device 100 is in the other period (i.e., in the period in which the loss in the auxiliary circuit 3 is more than the turn-off loss), it is possible to eliminate the loss in the auxiliary circuit 3 by bringing the auxiliary circuit 3 to the non-operating state. Thus, it is possible to reduce the loss in the power supply device 100 as a whole. That is, in the case where the auxiliary circuit 3 is provided to reduce the turn-off loss, the auxiliary circuit 3 is brought to the non-operating state when the loss in the auxiliary circuit 3 is more than the turn-off loss. Thus, compared to the case in which the auxiliary circuit 3 is continuously operated, it is possible to further reduce the loss in the power supply device 100 as a whole. Whether the power supply device 100 is in the certain period or in the other period is determined, for example, based on the absolute value of the input voltage from the AC power supply 150.

Specifically, the loss $P_{3\_LOSS}$ in the auxiliary circuit 3 is expressed by the following equation (1):

[Mathematical 1]

$$P_{3\_LOSS} = P_{L31\_LOSS} + P_{D34\_LOSS} + P_{Tr33\_LOSS} \qquad \cdots (1)$$

In the above equation (1), $P_{L31\_LOSS}$ represents the conduction loss in the inductor 31, $P_{D34\_LOSS}$ represents the conduction loss in the diode 34, and $P_{Tr33\_LOSS}$ represents the conduction loss in the transistor 33.

Also, the conduction loss $P_{L31\_LOSS}$ in the inductor 31 is expressed by the following equation (2):
[Mathematical 2]

$$P_{L31\_LOSS} = \int_0^{\frac{Ta}{2}} I_{L31}{}^2 R_{L31} dt \qquad \cdots (2)$$

In the above equation (2), Ta represents the resonant period, $I_{L31}$ represents the current that flows through the inductor 31, and $R_{L31}$ represents the resistance of a copper wire of the inductor 31.

Also, the conduction loss $P_{D34\_LOSS}$ in the diode 34 is expressed by the following equation (3):
[Mathematical 3]

$$P_{D34\_LOSS} = \int_0^{\frac{Ta}{2}} V_{D34} I_{D34} dt \qquad \cdots (3)$$

In the above equation (3), Ta represents the resonant period, $V_{D34}$ represents the voltage (forward voltage drop) between the terminals of the diode 34, and $I_{D34}$ represents the current that flows through the diode 34.

Also, the conduction loss $P_{Tr33\_LOSS}$ in the transistor 33 is expressed by the following equation (4):
[Mathematical 4]

$$P_{Tr33\_LOSS} = \int_0^{\frac{Ta}{2}} I_{Tr33}{}^2 R_{Tr33} dt \qquad \cdots (4)$$

In the above equation (4), Ta represents the resonant period, $I_{Tr33}$ represents the current that flows through the transistor 33, and $R_{Tr33}$ represents the ON-resistance of the transistor 33.

Meanwhile, the turn-off loss $P_{SWOFF\_LOSS}$ in the transistor 22 is expressed by the following equation (5):
[Mathematical 5]

$$P_{SWOFF\_LOSS} = \int_0^{Tswoff} I_{Tr22} V_{Tr22} dt \qquad \cdots (5)$$

In the above equation (5), Tswoff represents the turn-off time, $I_{Tr22}$ represents the current between the drain and the source of the transistor 22, and $V_{Tr22}$ represents the voltage between the drain and the source of the transistor 22.

In the power supply device 100, since the value of the current that flows through the transistor 22 changes according to the absolute value of the sinusoidal input voltage $V_{AC}$ that is input from the AC power supply 150, the value of the turn-off loss $P_{SWOFF\_LOSS}$ also changes.

Then, the relationship of the loss $P_{3\_LOSS}$ in the auxiliary circuit 3 and the turn-off loss $P_{SWOFF\_LOSS}$ was obtained by simulation. As the simulation conditions, the combined resistance in the auxiliary circuit 3 was set to $0.8\Omega$ and the forward voltage drop in the diode 34 was set to 0.867V, in addition to the above-described set values. The results are indicated in FIG. 5.

As can be seen from the graph in FIG. 5, the loss $P_{3\_LOSS}$ in the auxiliary circuit 3 was substantially constant regardless of the absolute value of the input voltage $V_{AC}$. In contrast, it was confirmed that as the absolute value of the input voltage $V_{AC}$ was increased, the turn-off loss $P_{SWOFF\_LOSS}$ was increased. Accordingly, when the absolute value of the input voltage $V_{AC}$ was not more than 45V, the loss $P_{3\_LOSS}$ in the auxiliary circuit 3 was more than the turn-off loss $P_{SWOFF\_LOSS}$, and when the absolute value of the input voltage $V_{AC}$ was more than 45V, the loss $P_{3-LOSS}$ in the auxiliary circuit 3 was less than the turn-off loss $P_{SWOFF\_LOSS}$.

Thus, it was found that when the absolute value of the input voltage $V_{AC}$ is not more than the predetermined value (for example, 45V), it is more efficient to determine that the power supply device 100 is in the other period and to bring the auxiliary circuit 3 to the non-operating state so that the turn-off loss $P_{SWOFF\_LOSS}$ is generated. Also, it was found that when the absolute value of the input voltage $V_{AC}$ is more than the predetermined value, it is more efficient to determine that the power supply device 100 is in the certain period and to bring the auxiliary circuit 3 to the operating state so that the turn-off loss $P_{SWOFF\_LOSS}$ is reduced. That is, when the absolute value of the input voltage $V_{AC}$ is more than the predetermined value, the auxiliary circuit 3 is brought to the operating state, and when the absolute value of the input voltage $V_{AC}$ is not more than the predetermined value, the auxiliary circuit 3 is brought to the non-operating state. Thus, it is possible to further reduce the loss in the power supply device 100 as a whole.

The embodiment described herein is to be considered in all respects as illustrative and not limiting. The technical scope of the present invention is indicated by the appended claims rather than by the foregoing embodiment, and all modifications and changes that come within the meaning and range of equivalency of the claims are intended to be embraced therein.

In this embodiment, the present invention is exemplarily applied to the power supply device 100. However, the present invention is not limited thereto. The present invention may be applied to another electronic circuit.

Also, in this embodiment, the single-phase power supply device 100 is exemplarily described. However, the present invention is not limited thereto. The present invention may be applied to a three-phase power supply device.

Also, in this embodiment, a low-pass filter (not shown) for removing high-frequency components of the input current may be provided between the AC power supply 150 and the rectification circuit 1.

Also, in this embodiment, whether the power supply device 100 is in the certain period or in the other period is exemplarily determined based on the absolute value of the input voltage from the AC power supply 150. However, the present invention is not limited thereto. Whether the power supply device 100 is in the certain period or in the other period may be determined based on the output voltage from the rectification circuit.

Industrial Applicability

The present invention is suitable for an electronic circuit including a power factor correction circuit and for a method for controlling the electronic circuit.

Description of Reference Numerals

| 1 | Rectification circuit |
|---|---|
| 2 | Power factor correction circuit |
| 3 | Auxiliary circuit |
| 5 | Control circuit |
| 22 | Transistor (first switching element) |
| 31 | Inductor |
| 32 | Capacitor |
| 33 | Transistor (second switching element) |
| 34 | Diode |
| 50 | Positive pole line |
| 60 | Negative pole line |
| 100 | Power supply device (electronic circuit) |
| 150 | AC power supply |

**Claims**

1. An electronic circuit, comprising:

a rectification circuit being configured to rectify an AC voltage input from an AC power supply;
a power factor correction circuit including a first switching element, the power factor correction circuit being configured to shape a current that is input, by the first switching element being driven, from the AC power supply to the rectification circuit;
an auxiliary circuit being configured to reduce switching loss in the first switching element by drawing the current from the rectification circuit before the first switching element is turned off so that the current that flows through the first switching element is reduced; and
a control circuit being configured to allow the auxiliary circuit to operate for a first period in a half cycle of the AC power supply, and to not allow the auxiliary circuit to operate for a second period in the half cycle of the AC power supply, the second period being other than the first period.

2. The electronic circuit according to claim 1,
wherein the first period is a period in which loss in operation of the auxiliary circuit is less than the switching loss, and
wherein the second period is a period in which the loss in operation of the auxiliary circuit is more than the switching loss.

3. The electronic circuit according to claim 1 or 2,
wherein the first period includes a period in which an absolute value of the input voltage from the AC power supply is maximum, and
wherein the second period includes a period in which the absolute value of the input voltage from the AC power supply is minimum.

4. The electronic circuit according to any one of claims 1 to 3,
wherein the control circuit determines that the electronic circuit is in the first period when an absolute value of the input voltage from the AC power supply is more than a predetermined value, and
wherein the control circuit determines that the electronic circuit is in the second period when the absolute value of the input voltage from the AC power supply is not more than the predetermined value.

5. The electronic circuit according to any one of claims 1 to 4,
wherein the auxiliary circuit includes: an inductor that is disposed in a positive pole line; a second switching element and a diode that are disposed on one end side of the inductor; and a capacitor that is disposed on another end side of the inductor,
wherein the capacitor is connected between the positive pole line and a negative pole line while the second switching element and the diode are connected in series between the positive pole line and the negative pole line, and
wherein, when the auxiliary circuit is operated, the second switching element is turned on before the first switching element that has been turned on is turned off.

6. A method for controlling an electronic circuit, the electronic circuit including:

a rectification circuit being configured to rectify an AC voltage input from an AC power supply;
a power factor correction circuit including a first switching element, the power factor correction circuit being configured to shape a current that is input, by the first switching element being driven, from the AC power supply to the rectification circuit; and
an auxiliary circuit being configured to reduce switching loss in the first switching element by drawing the current from the rectification circuit before the first switching element is turned off so that the current that flows through the first switching element is reduced,
the method comprising the steps of:

determining whether the electronic circuit is, in a half cycle of the AC power supply, in a first period or in a second period other than the first period; and
allowing the auxiliary circuit to operate when the electronic circuit is in the first period, and not allowing the auxiliary circuit to operate when the electronic circuit is in the second period.

7. The method for controlling an electronic circuit according to claim 6,
wherein the first period is a period in which loss in operation of the auxiliary circuit is less than the switching loss, and
wherein the second period is a period in which the loss in operation of the auxiliary circuit is more than the switching loss.

FIG.1

EP 3 193 439 A1

FIG.2

5

Control circuit

51

CPU

52

ROM

53

RAM

54

Input interface

55

Output interface

| Input voltage sensor | Input current sensor | Output voltage sensor | Power factor correction circuit | Auxiliary circuit |

5a · 5b · 5c · 2 · 3

FIG.3

FIG.4

FIG.5

## INTERNATIONAL SEARCH REPORT

| | International application No. |
| --- | --- |
| | PCT/JP2015/074668 |

**A. CLASSIFICATION OF SUBJECT MATTER**
*H02M7/12(2006.01)i*

According to International Patent Classification (IPC) or to both national classification and IPC

**B. FIELDS SEARCHED**

Minimum documentation searched (classification system followed by classification symbols)
H02M7/12

Documentation searched other than minimum documentation to the extent that such documents are included in the fields searched
Jitsuyo Shinan Koho          1922–1996     Jitsuyo Shinan Toroku Koho      1996–2015
Kokai Jitsuyo Shinan Koho     1971–2015     Toroku Jitsuyo Shinan Koho      1994–2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y<br>A | JP 2004-328848 A   (Sanken Electric Co., Ltd.),<br>18 November 2004 (18.11.2004),<br>paragraphs [0033], [0045], [0073], [0100] to<br>[0101]; fig. 10, 18<br>(Family: none) | 1,3-4,6<br>2,5,7 |
| Y<br>A | JP 2007-116874 A   (Mitsubishi Electric Corp.),<br>10 May 2007 (10.05.2007),<br>paragraphs [0012] to [0019]; fig. 1, 3<br>(Family: none) | 1,3-4,6<br>2,5,7 |
| A | JP 2010-141974 A   (Toyota Motor Corp.),<br>24 June 2010 (24.06.2010),<br>entire text; all drawings<br>(Family: none) | 1-7 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    05 November 2015 (05.11.15) | Date of mailing of the international search report<br>    17 November 2015 (17.11.15) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (July 2009)

**INTERNATIONAL SEARCH REPORT**

International application No.

PCT/JP2015/074668

C (Continuation). DOCUMENTS CONSIDERED TO BE RELEVANT

| Category* | Citation of document, with indication, where appropriate, of the relevant passages | Relevant to claim No. |
|---|---|---|
| A | JP 2006-223008 A (Hitachi, Ltd.), 24 August 2006 (24.08.2006), paragraphs [0041] to [0045]; fig. 6 & US 2006/0176719 A1 paragraphs [0126] to [0130]; fig. 6 & DE 102006004586 A1 | 1-7 |
| A | MAHDAVI,Mohammad et al., Zero-Current-Transition Bridgeless PFC Without Extra Voltage and Current Stress, IEEE TRANSACTIONS ON INDUSTRIAL ELECTRONICS, VOL.56, NO.7, JULY 2009 | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MOHAMMAD ; MAHDAVI ; HOSEIN FARZANEH-FARD.** Zero-Current-Transition Bridgeless PFC Without Extra Voltage and Current Stress. *IEEE Transactions on Industrial Electronics,* July 2009, vol. 56 (7